# EUROPEAN PATENT APPLICATION

(11) **EP 1 343 164 A1**
(43) Date of publication of application: **10.09.2003**
(21) Application number: 01270885.5
(22) Date of filing: 11.12.2001
(51) Int. Cl.: G11B 20/12, H04N 5/92

(54) **MAGNETIC RECORDING/REPRODUCING METHOD AND MAGNETIC RECORDER/REPRODUCER**

(30) Priority: 11.12.2000 JP 2000375703
(71) Applicant: SONY CORPORATION, Tokyo 141 (JP)
(72) Inventor: SENSHU, Yoichiro, c/o SONY CORPORATION, Shinagawa-ku, Tokyo 141-0001 (JP); HIGASHIO, Yasuhiro, c/o SONY CORPORATION, Shinagawa-ku, Tokyo 141-0001 (JP); HASEGAWA, Shinichi, c/o SONY CORPORATION, Shinagawa-ku, Tokyo 141-0001 (JP)
(74) Representative: Pilch, Adam John Michael
(86) International application number: JP0110858
(87) International publication number: WO02049030

(57) **Abstract**

In a magnetic recording and playback apparatus for performing recording or playback of compressed digital data using a helical scan technique, no deterioration is caused in the RF characteristics of search data recorded on a magnetic tape, which is data used only during variable-speed playback, thus providing satisfactory characteristics during variable-speed playback, such as during a search operation. In a magnetic recording and playback method for performing recording or playback of compressed digital data to/from a magnetic tape (1) using a helical scan technique, recording areas, which are a main data area (MD), a subcode area (SC), and a search data area (SD) are continuously disposed in each track (Tr0, Tr1, ...) on the magnetic tape, in that order from the beginning, without providing intervening areas therebetween.

## Description

### Technical Field

The present invention relates to magnetic recording and playback methods and to magnetic recording and playback apparatuses for performing recording or playback of compressed digital signals to/from magnetic tape.

### Background Art

Recently, magnetic recording and playback apparatuses for recording or playing back digital video signals and audio signals to/from magnetic tape, such as portable video recorders built into cameras, non-portable video tape recorders, and so forth, have come onto the market.

As the recording format used in these digital magnetic recording and playback apparatuses, there is a format known as DV format (IEC 61834 helical scan digital video tape cassette recording system using 6.35-mm magnetic tape for consumers - 525/60, 625/50, 1125/60 and 1250/50 system).

The width of the magnetic tape used in the DV format is 6.35 mm (1/4 inch), which is narrower than the width of the magnetic tape used in the recording format in conventional analog magnetic recording and playback apparatuses, for example, the 8-millimeter format (IEC 60843 helical scan video tape cassette recording system using 8 mm magnetic tape for consumers) video tape recorders.

Moreover, in spite of the fact that the tape width in the DV format is smaller than that used in conventional formats, the recorded signal data is compressed and the recording density is higher. Therefore, it is possible to record with higher image quality for longer recording times than in video tape recorders using an analog format, such as the 8-millimeter format.

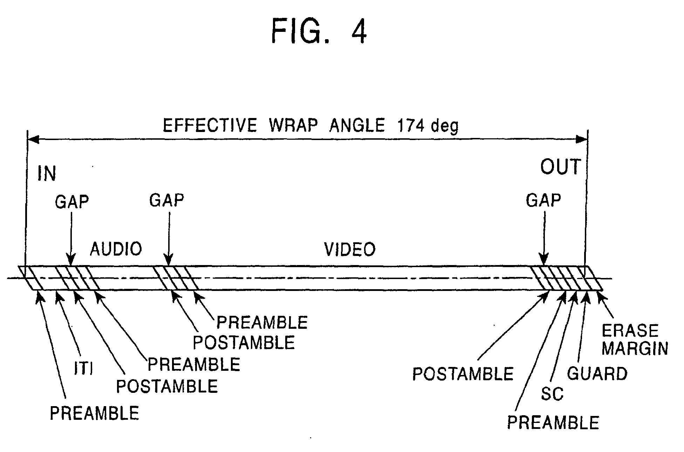

Fig. 4 shows the track geometry of a magnetic tape in a DV-format video tape recorder. An Insert and Track Information area ITI, which is used as a standard time-axis for so-called after-recording, an audio area Audio, which is separated from ITI by an intervening area (ITG: Inter Track Gap) Gap, and a video area Video, which is separated from Audio by another intervening area Gap, are disposed in sequence from the beginning of the track. After these, a subcode area SC, which is separated from Video by yet another intervening area Gap, is disposed.

The DV format has a structure in which one frame of video signals according to the NTSC (or PAL) format are recorded in a total of 10 (or 12) tracks. That is to say, the correspondence between the tracks and video frames is fixed.

Therefore, for example, during variable-speed playback mode wherein a function for scanning for a desired picture (frame), that is, a so-called search function, is performed by fast-forwarding the magnetic tape while viewing the picture, since the correspondence between tracks and frames is fixed, even if playback is started from an arbitrary portion of the magnetic tape, it is possible to display an image if data for a predetermined number of tracks is read-out, and it is also possible to easily specify where on the magnetic tape a desired frame is recorded.

However, when, for example, digital data including video signals and audio signals compressed by the MPEG2 format is recorded, since the correspondence between tracks and frames depends on the characteristics of that compression process and therefore is not fixed, it is difficult to specify at which position on the magnetic tape a certain frame is recorded. Furthermore, if playback is started from an arbitrary portion of the magnetic tape, there is a problem in that it is not possible to display an image when all the image signals for one frame are not recorded at that portion.

As the format used for recording the digital signals which include video signals and audio signals compressed according to, for example, the MPEG2 format, there is a widely known technique in which data used only during variable-speed playback for searching and so on, that is, search data, is combined with other data and recorded in each track on the magnetic tape. However, depending on-the position at which the search data is recorded in the tracks, problems such as those described below occur.

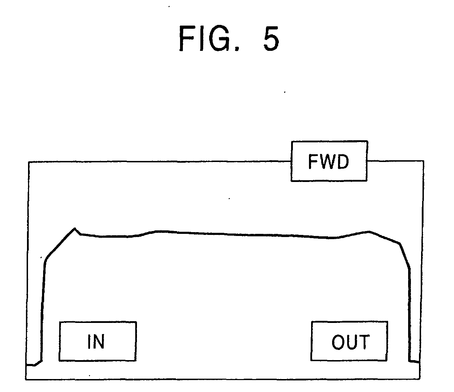

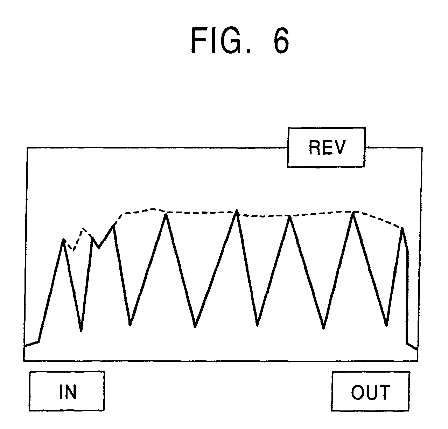

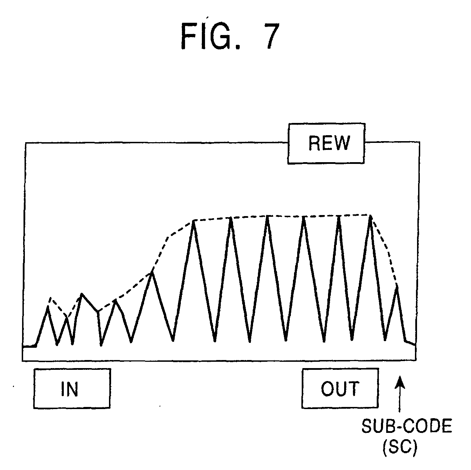

The RF outputs for each track during the normal playback mode (FWD) and during variable-speed playback, such as a high-speed playback mode (Cue & Review) or a fast-forward or rewind playback mode (FF & rewind), are as shown in Figs. 5 to 7. That is, during FWD, a satisfactory RF level is maintained at both the head exit and the head entry ends of the track; however, during Cue & Review (approximately 5X to 30X speed) a deterioration in the RF output is observed in the vicinity of the entry point of a head where a thick air film exists. Moreover, during FF and Rewind (approximately 30X to 200X speed), in addition to the above-mentioned deterioration in the RF output in the vicinity of the head entry point, a deterioration in RF output is also observed in the vicinity of the head exit point.

Accordingly, in the DV format, since position information (track number, etc.), which is referred to during FF & Rewind, is recorded in the subcode area SC on the magnetic tape, that is to say, in the vicinity of the head exit point of the track, as shown in Fig. 4, it is difficult to ensure the necessary RF output level.

Furthermore, when a digital recording and playback apparatus records a non-standard signal, that is to say, a signal in which a time axis of the output signal, for example, from a video game machine or from an analog recording and playback apparatus during variable-speed playback deviates from the specifications of the NTSC format, the PAL format, or the like, the length of each track, in which digital data having a fixed clock frequency is recorded, is caused to increase or decrease if the rotation of the rotating drum follows the above mentioned non-standard signal.

Therefore, for example, if the length of a track is caused to increase, since the position of the head exit point on the track is made to deviate, data recording is performed even in the portions of the magnetic tape where RF output characteristics cannot be ensured.

In particular, this effect can easily occur in formats in which a subcode area SC is recorded in the vicinity of the head exit point of the track, such as in the DV format. If the data recorded in the subcode area SC cannot be read-out, problems occur during the operation of the apparatus since it is not possible to specify the destination during searching.

In light of the problems described above, the present invention is directed towards a magnetic recording and playback apparatus, for performing recording or playback of compressed digital data using a helical scan technique, in which no deterioration is caused in the RF characteristics of search data recorded on the magnetic tape, which is data that is used only during variable-speed playback, such as during searching, thus providing satisfactory characteristics during variable-speed playback, such as during a search operation.

### Disclosure of Invention

In order to solve the problems described above, the present invention provides a magnetic recording and playback method and a magnetic recording and playback apparatus, for performing recording or playback of compressed digital data by using a helical scan technique, in which recording areas, that is to say, a main data area, a subcode area, and a search data area are continuously disposed, in the stated order, from the beginning of each track on the magnetic tape, without providing intervening areas therebetween.

Accordingly, it is possible to avoid deterioration in the RF characteristics of search data recorded on the magnetic tape, which is data that is used only during variable-speed playback, such as during searching, thus providing satisfactory characteristics during variable-speed playback, such as during a search operation.

### Brief Description of the Drawings

Fig. 1, together with Fig. 2 and Fig. 3, shows an embodiment of the magnetic recording and playback method and the magnetic recording and playback apparatus according to the present invention; this figure shows the track pattern on a magnetic tape.
Fig. 2 is a drawing for explaining a tape wrap angle on a rotating drum.
Fig. 3 shows the data pattern of a track.
Fig. 4 shows the data pattern of a track in a conventional recording format.
Fig. 5, together with Fig. 6 and Fig. 7, shows the problems that occur during variable-speed playback in the conventional recording format; this figure shows an example of the RF waveform during a normal playback mode.
Fig. 6 shows an example of the RF waveform during a high-speed playback mode.
Fig. 7 shows an example of the RF waveform during a fast-forward or a rewind playback mode.

### Best Mode for Carrying Out the Invention

An embodiment of the magnetic recording and playback method and apparatus according to the present invention is described below with reference to the attached drawings.

In the embodiment shown below, the present invention is applied to a magnetic recording and playback method and a magnetic recording and playback apparatus employing the magnetic recording and playback method that record and play back digital data compressed by the MPEG (Moving Picture Group) 2 format to and from a 3.81-mm (=3/20 inch) wide magnetic tape.

In outline, the magnetic recording and playback method according to the present invention is a magnetic recording and playback method which performs recording or playback of compressed digital data to/from a magnetic tape using a helical scanning technique. In each track on the magnetic tape, a main data area, a subcode area, and a search data area are continuously disposed in that order from the beginning, without intervening areas being provided therebetween, and in addition, C2 parity areas for correction of the main data recorded in the main data areas are provided at the ends of the tracks.

Furthermore, in a magnetic recording and playback apparatus which performs recording or playback of compressed digital data to/from a magnetic tape using a helical scanning technique, in outline, the magnetic recording and playback apparatus according to the present invention records, with recording means, a main data area, a subcode area, and a search data area in each track on the magnetic tape, in that order from the beginning, without providing intervening areas therebetween, and also records C2 parity areas for correction of the main data recorded in the main data areas at the end of the tracks.

Table 1 below shows various values concerning the format (hereinafter referred to as "the present format") of the magnetic recording and playback method and the magnetic recording and playback apparatus according to the present invention.

**Table 1**

| | |
|---|---|
| Item | Value (625-50, 525-60) |
| Rotating drum diameter | 21.7 mm |
| Rotational speed of rotating drum | 6000 rpm |
| Number of tracks per rotation of rotating drum | 1 |
| Rotating drum read angle | 5.0670 deg. |
| Recording track angle (θr) | 5.0712 deg. |
| Track pitch | 5.0 µm |
| Tape speed | 5.6565 mm/sec |
| Relative speed | 6.8116 m/sec |
| Recording rate | 47.70 Mbps |
| Surface recording density | 0.904 Gbpi² |
| Source surface recording density | 0.803 Gbpi² |
| Minimum recording wavelength | 0.286 µm |
| Effective track length | 31.788 mm |
| Sync lag | 8.272 µsec |
| Pch azimuth angle | +25 deg. (Tr0) |
| Mch azimuth angle | -25 deg. (Tr1) |
| Effective wrap angle | 168 deg. |
| Tape width | 3.81 mm |
| Effective area starting height | 0.500 mm |
| Track center height | 1.905 mm |

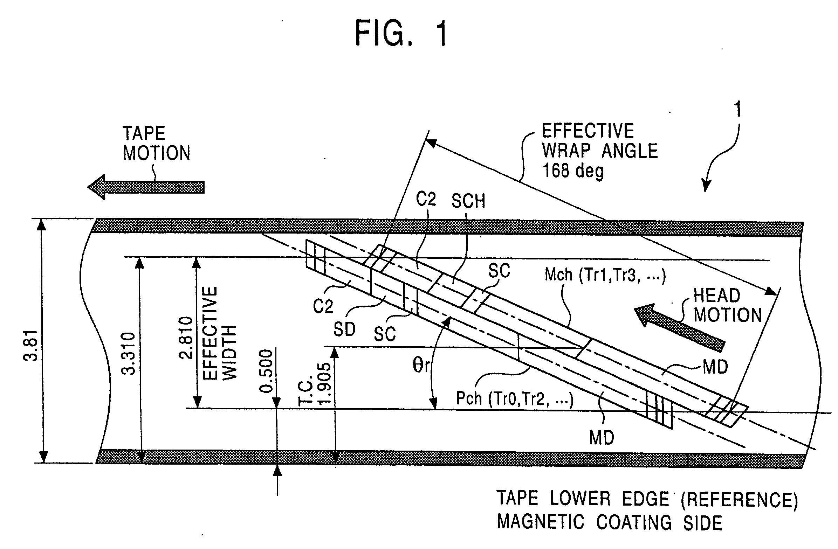

Furthermore, the track pattern of the magnetic tape is shown in Fig. 1.

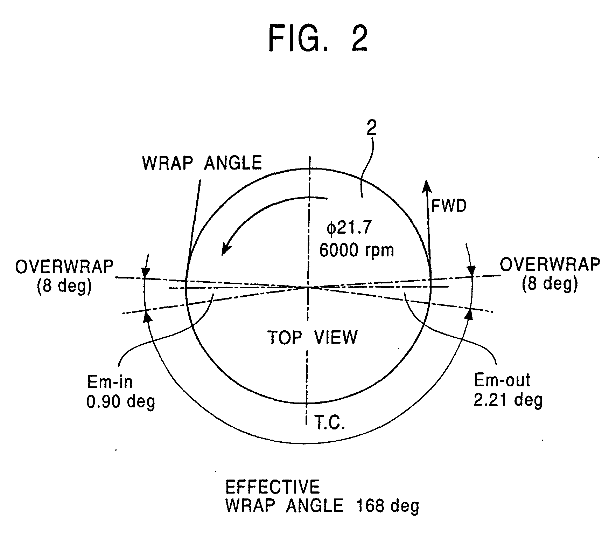

As shown in Table 1 and Fig. 2, in the present format, digital data compressed according to the MPEG2-format is alternately recorded in Tracks Tr0 and Tr1, one of each being provided in one rotation of the rotating drum 2, by the two recording heads of the 21.7-mm diameter rotating drum, which rotates at 6000 rpm.

In other words, two magnetic heads for recording (not shown in the drawings), which have different azimuth angles, are provided on the rotating drum 2 at positions that are separated from each other by 180°. Then, as shown in Fig. 1, by scanning these two magnetic heads at a predetermined angle (θr = 5.0712°) with respect to the running direction of the magnetic tape, the track pattern shown in Fig. 1 is formed.

Regarding the wrap angle of the magnetic tape 1 around the rotating drum 2, as shown in Fig. 2, the magnetic tape 1 is wrapped around the rotating drum 2 over a range of 168°, not including overwrap portions of 8° at each of the entry side and the exit side. When each magnetic head 3 moves over this 168° range, the signals which are recorded form one track (Tr0 or Tr1) on the magnetic tape 1.

Moreover, during data recording on the magnetic tape 1, the magnetic head that is used in data recording in each single rotation of the rotating drum 2 is switched. For example, data recording in Tr0 is performed by one of the magnetic heads during the first rotation of the rotating drum 2, and then, in the next rotation, data recording in the next track Tr1 is performed by the other magnetic head, which has a different azimuth angle. After that, this operation is repeated.

Furthermore, during playback of the data, a double density playback method is used, in which two playback heads, which are not shown in the drawings, perform a normal playback operation in one rotation of the rotating drum 2, and they each play back RF. According to this method, since the same track is played back by two heads with a small shift, it is possible, as a result, to reduce interchangeability problems due to curving of the tracks.

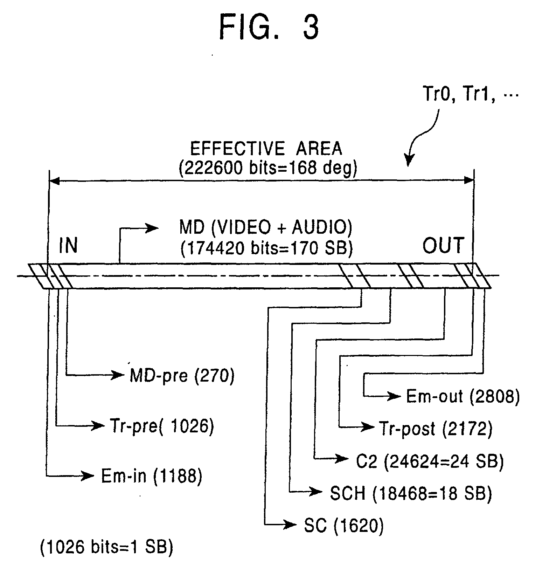

The track pattern of the tracks Tr0 and Tr1 on the magnetic tape according to the present format is shown in Fig. 3.

In the present format, as shown in Table 1 above, the effective wrap angle of the magnetic head is 168°. As shown in Fig. 3, a 1026-bit track preamble area (Tr-pre), a 270-bit main data Preamble area (MD-pre), a 174420-bit (=170 SB) main data area (MD), a 1620-bit subcode area (SC), a 18468-bit (=18 SB) search data area (SD), a 24624-bit (24 SB) C2-area (C2), and a 2172-bit track post-amble area (Tr-post) are disposed within this effective wrap angle, in this order from the entry point of the magnetic head.

Moreover, no intervening area is provided between each of the above-mentioned areas. Furthermore, the main data area MD is an area in which data combining video data and audio data is recorded, the search data area SD is an area in which video data used for variable-speed playback is recorded, and the C2-area C2 is an area in which C2 parity data used for correcting the main data is recorded.

Also, a 1188-bit Erase margin-in area (Em-in) and a 2808-bit Erase margin-out area (Em-out) are provided as erase margins before and after the effective wrap angle, respectively.

In each playback mode, the areas in which the recorded data is used are as follows. That is to say, during normal playback, the data in all areas other than the search data area SD is read out; during Cue & Review (approximately 5X to 30X speed), which is a high-speed playback mode which searches for the recording position of arbitrary data while playing back images, data in the search data area SD, which is used for displaying images during variable-speed playback, and data in the subcode area SC, which is used to confirm the track number and the time axis, is read out; and during FF & Rewind (approximately 30X to 200X speed), which is a fast-forward or a rewind playback mode in which it is not necessary to display images, only data in the subcode area, which is used for checking the track number and the time axis, is read out.

Accordingly, in playback modes apart from the normal playback mode, that is, during Cue & Review and during EF & Rewind, since the areas using data can be restricted as described above, by adopting the arrangement of each area in the present format, it is possible to read-out, without difficulty, the data in the search data area SD and the subcode area SC during Cue & Review, where the RF characteristics of the magnetic head in the vicinity of the entry point are deteriorated, and furthermore, it is also possible to read-out, without difficulty, the data in the subcode area SC during FF & Rewind, where the RF characteristics of the magnetic head in the vicinity of the exit point are deteriorated.

The feature of the present format is the fact that the individual areas are arranged in each track Tr0, Tr1, Tr2,... in the order given above. That is to say, as shown in Fig. 3, a search data area SD, which is used during variable-speed playback, and a C2-area C2 are disposed at the end of the track (in the vicinity of the magnetic head exit point) and a subcode area SC is disposed before the search data area SD; furthermore, intervening areas provided between the main data area MD and the subcode area SC and between the subcode area SC and the search data area SD are omitted. Moreover, the reason why the C2-area C2 is disposed at the end of the track is that, since the C2-area, which is C2 parity for the main data, is not used at all during searching (during variable-speed playback), no problems_ occur even if it is disposed in the vicinity of the magnetic head exit point of the track, where deterioration in the RF characteristics is observed during 30X to 200X FF & Rewind.

As described above, in the present format, even though deterioration occurs in the RF characteristics in the vicinity of the track exit point of the magnetic head during FF & Rewind, it has no effect since a subcode area SC, which is necessary for reading out the data, is disposed far away from the vicinity of the track exit point of the magnetic head. Accordingly, since the subcode area is not affected by the deterioration in the RF characteristics, when searching is performed for the recording location of certain video data at high speed using the data recorded in the subcode area SC, it is possible to perform more high-speed searching without taking the deterioration of the RF characteristics into account as long as other conditions are satisfied. Furthermore, it is also possible to prevent problems such as it being impossible to find a desired recording location because of the inability to read out the data written in the subcode area SC.

Moreover, since no intervening areas are provided between the individual areas, it is possible to effectively utilize the effective data area in one track.

Both the actual form and structure of the individual parts shown in the above-described embodiment represent_only an example of the embodiment for realizing the present invention and these should not be interpreted as limiting the technical scope of the present invention.

The magnetic recording and playback method according to the present invention described above performs recording or playback of compressed digital data to/from a magnetic tape by using a helical scan technique, and since recording areas, which are a main data area, a subcode area, and a search data area, are continuously provided in each track on the magnetic tape, in the stated order from the beginning, without providing intervening areas therebetween, it is possible to effectively utilize the effective data region. Furthermore, during an approximately 5X to 30X variable-speed playback mode such as Cue & Review, it is possible to prevent bad effects on the read-out of the data recorded in the search data area and the subcode data area due to deterioration in the RF characteristics .

In the invention described in Claim 2, since a C2 parity area for correcting the main data recorded in the main data area is disposed at the end of the track, it is possible to prevent bad effects on the read-out of the data recorded in the subcode data area due to deterioration in the RF characteristics during approximately 5X to 30X variable-speed playback modes such as Cue & Review, and also during 30X to 200X variable-speed playback modes such as FF & Rewind.

Regarding the magnetic recording and playback apparatus according to the present invention, in a magnetic recording and playback apparatus which performs recording or playback of compressed digital data to/from a magnetic tape by using a helical scan technique, since a main data area, a subcode area, and a search data area are recorded in each track on the magnetic tape, in that order from the beginning, by recording means, without providing intervening areas therebetween, it is possible to effectively utilize the effective data region. Furthermore, it is possible to prevent bad effects on the read-out of the data recorded in the search data area and the subcode data area due to deterioration in the RF characteristics during approximately 5X to 30X variable-speed playback modes, such as Cue & Review.

In the invention described in Claim 4, since a C2 parity area for correcting the main data recorded in the main data area is recorded at the end of the track, it is possible to prevent bad effects on the read-out of the data recorded in the subcode data area due to deterioration in the RF characteristics during approximately 5X to 30X variable-speed playback modes such as Cue & Review, and also during 30X to 200X variable-speed playback modes such as FF & Rewind.

## Claims

1. A magnetic recording and playback method for performing recording or playback of compressed digital data to/from a magnetic tape by using a helical scan technique, said magnetic recording and playback method being **characterized in that** recording areas, which are a main data area, a subcode area, and a search data area are continuously disposed in each track on the magnetic tape, in the stated order from the beginning, without providing intervening areas therebetween.

2. A magnetic recording and playback method according to Claim 1, wherein a C2 parity area for correcting main data recorded in the main data area is disposed at the end of the track.

3. A magnetic recording and playback apparatus for performing recording or playback of compressed digital data to/from a magnetic tape by using a helical scan technique, said magnetic recording and playback apparatus being **characterized in that** a main data area, a subcode area, and a search data area are recorded, in the stated order from the beginning, in each track on the magnetic tape by recording means, without providing intervening areas therebetween.

4. A magnetic recording and playback apparatus according to Claim 3, wherein a C2 parity area for correcting main data recorded in the main data area is recorded at the end of the track.
